# EUROPÄISCHE PATENTSCHRIFT

(11) **EP 2 213 179 B1**
(45) Veröffentlichungstag und Bekanntmachung des Hinweises auf die Patenterteilung: **14.03.2012**
(21) Anmeldenummer: 10000460.5
(22) Anmeldetag: 19.01.2010
(51) Int. Cl.: A23G 1/26, A23G 3/02, A23G 7/00, A23G 7/02

(54) **Vorrichtung zum Temperieren von Schokoladenmassen oder Ähnlichem in Giessblechen**
Apparatus for tempering chocolate masses or similar masses in mould trays
Appareil à conditionner pour masses chocolats et masses similaires en tôles de moule

(30) Priorität: 20.01.2009 IT MI20090046
(43) Veröffentlichungstag der Anmeldung: 04.08.2010
(73) Patentinhaber: Carle & Montanari S.p.A, 20089 Rozzano (MI) (IT)
(72) Erfinder: Manzon, Daniele, 20095 Cusano Milanino (IT)
(74) Vertreter: Mayer, Hans Benno

(56) Entgegenhaltungen:
- EP-A1- 0 661 003
- EP-A2- 0 953 292
- DE-A1- 3 703 911
- DE-C- 703 373
- GB-A- 629 982
- US-A1- 2003 152 659

## Beschreibung

Die vorstehende Erfindung betrifft eine Anlage zum Temperieren von Schokoladenmassen oder Ähnlichem, die in den Ausnehmungen von Gießblechen angeordnet sind.

Es ist aus dem Stand der Technik (Europäisches Patent 0.661.003) bekannt geworden, Schokoladenmassen oder ähnliche Erzeugnisse der Süßwarenindustrie in Vorrichtungen zu temperieren, denen die Gießbleche mit der zu behandelnden Masse über eine horizontal angeordnete Förderstrecke zugeführt werden.

Im Inneren der Vorrichtung werden die Gießbleche mit ihrem Inhalt gestapelt und von unten nach oben gefördert, wo die genannten Gießbleche eine Querverschiebung erfahren, um einen zweiten, vertikal angeordneten Stapel zu bilden, der sich von oben nach unten bewegt.

Jeweils das unterste Gießblech wird im Anschluss daran aus der Vorrichtung abgefördert, dies unter Verwendung eines horizontal angeordneten Transportbandes.

Die bekannte Anlage zeichnet sich durch eine zufriedenstellende Arbeitsweise aus, weist aber den Nachteil auf, dass aufgrund der technischen Ausbildung der Anlage diese lediglich und ausschließlich für eine ganz bestimmte Art von Gießblechen verwendbar ist, die einen vorbestimmten Aufbau aufweisen und genau festgelegte Abmessungen haben und stets gleichbleibende Dicke aufweisen.

Ferner weisen die bekannten Gießbleche an ihrer Unterseite, in Übereinstimmung mit ihren seitlichen Enden, fußartige Vorsprünge auf, mit denen die Gießbleche auf darunterliegenden Gießblechen aufliegen.

Desweiteren weisen die bekannten Gießbleche mittig einen Vorsprung auf, der dazu dient, sich mit den Gewindegängen einer horizontal angeordneten Förderschnecke zu verbinden. Dies führt dazu, dass Gießbleche mit unterschiedlichen Abmessungen oder mit unterschiedlichem technischen Aufbau, nicht in der bekannten Temperieranlage einsetzbar sind.

Ferner konnte festgestellt werden, dass in den bekannten Temperieranlagen die Umwälzung der Luft nicht als optimal angesehen werden kann, was zu einer Verminderung der gewünschten Temperierleistung für das Erzeugnis führt.

Es ist daher Aufgabe der vorstehenden Erfindung, die Nachteile des Standes der Technik zu vermeiden und eine Temperieranlage der vorgenannten Art vorzuschlagen, in der Schokoladenmassen oder andere Süßwarenartikel, welche in den Hohlräumen von Gießblechen enthalten sind, behandelt werden können, wobei die Gießbleche unterschiedliche Abmessungen, insbesondere unterschiedliche Dicke aufweisen können, und ferner die thermodynamische Leistung im Inneren der Anlage erheblich verbessert wird.

Durch die Möglichkeit, allgemein übliche Gießbleche zu verwenden, die ohne Abstandsvorrichtungen ausgebildet sind, und den Einsatz auch von Gießblechen mit unterschiedlicher Dicke erlauben und insbesondere ein direkter Kontakt zwischen den einzelnen Gießblechen während des Temperiervorganges vermieden wird, wird auch der Nachteil beseitigt, dass sich die Gießbleche gegenseitig verschmutzen. Ferner wird es ermöglicht, auf seitlich, vertikal angeordnete Führungen zum Fördern der Gießbleche zu verzichten.

Die vorgenannte Aufgabenstellung wird mit einer Temperieranlage für Schokoladenmasse und Ähnlichem, die in den Hohlräumen von Gießblechen enthalten sind, unter Einsatz einer bekannten Hebevorrichtung für die zugeführten Gießbleche, sowie mit einer bekannten Vorrichtung zum Absenken der abzufördernden Gießbleche dadurch gelöst, dass die Temperieranlage eine Einlauföffnung für die gefüllten Gießbleche, sowie eine Vorrichtung zum Stapeln und Anheben der zugeführten Gießbleche aufweist, sowie eine Vorrichtung zum Absenken und Abfördern der behandelten Gießbleche, wobei die Gießbleche im Inneren der Temperieranlage mit ihren Enden auf bewegbaren, quer angeordneten Streben aufliegen und das Ende einer jeden Querstrebe eine säulenartige Stütze aufnimmt, die an ihrer Oberseite mit einem zugespitzten Endstück und an ihrer Unterseite mit einer konisch ausgebildeten Ausnehmung versehen ist, wobei während des Fördervorganges in der Temperieranlage das zugespitzte Ende einer unten liegenden Stütze mit der konischen Ausnehmung einer darüberliegenden Stütze verbindbar ist und jede Stütze eine Länge aufweist, die den Freiraum zwischen jeweils zwei parallel zueinander angeordneten Querstreben festlegt, die die zu behandelnden Gießbleche aufnehmen.

Weitere Vorteile der Erfindung sind der nun folgenden Beschreibung, den Unteransprüchen sowie den beigefügten Zeichnungen zu entnehmen.

Die erfindungsgemäße Einrichtung wird nun genauer anhand eines Ausführungsbeispieles beschrieben und in den beigefügten Zeichnungen dargestellt. Es zeigen:
Figur 1 schematisch eine Temperiereinrichtung für Gießbleche, welche Schokoladenmasse oder allgemein Süßwarenmasse enthalten;
Figur 2 zeigt schematisch die Querstreben, die mit Positioniereinrichtungen für den Transport der Gießbleche ausgerüstet sind; und
Figur 3 zeigt in perspektivischer Darstellung Querstreben zum Transport und zur Aufnahme einer Anzahl von Gießblechen.

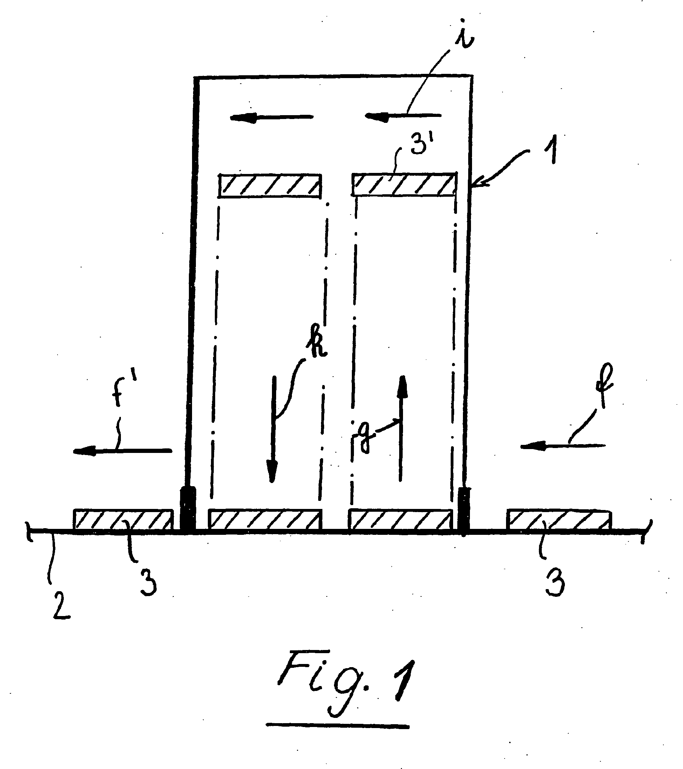

Wie der Figur 1 zu entnehmen ist, weist die Temperieranlage gemäß der vorstehenden Erfindung einen turmartigen Aufbau auf und ist in ihrer Gesamtheit mit 1 gekennzeichnet.

Der untere Teil der Temperieranlage 1 wird, dank der Vorsehung von Abdeckungen, von einem horizontal angeordneten Förderband 2 durchlaufen, und dieses Förderband 2 fördert hintereinander und im Abstand Gießbleche 3, die in ihren Ausnehmungen Schokoladenmasse oder andere Süßwarenerzeugnisse aufnehmen, die dem Temperiervorgang zu unterziehen sind (Kühlen, Erwärmen).

Sobald das Gießblech 3 das Innere der Vorrichtung 1 erreicht hat, wird das Gießblech mit einer nach oben gerichteten Bewegung in Richtung des Pfeiles (g) bewegt und bildet somit einen Stapel.

Bei Erreichen des oberen Teiles der Vorrichtung 1 wird das oberste Gießblech 3' in an sich bekannter Weise in einer horizontalen Ebene vorschoben, wie dies durch die Pfeile (i) angedeutet ist. Im Anschluss daran werden die Gießbleche einer Abwärtsbewegung ausgesetzt und bilden erneut einen Stapel, der sich nach unten bewegt, wie dies schematisch mit dem Pfeil (k) angedeutet ist. Anschließend wird erneut ein Gießblech 3 auf dem Förderband 2 abgelegt, wie dies durch den Pfeil (f') dargestellt ist.

Während der Durchführung der Bewegungen g, i, k wird der Inhalt der Gießbleche einem für den Temperiervorgang geeigneten Klima ausgesetzt, das im Inneren der Anlage vorherrscht.

Die Anlage 1 ist in Figur 1 nur schematisch dargestellt.

Es ist darauf hinzuweisen, dass Anlagen dieser Art für den Temperiervorgang von Schokoladenmassen im Detail bereits in EP 0.661.003 beschrieben sind. Der Inhalt dieser Schrift stellt den Stand der Technik dar, der bei der Auslegung der folgenden Beschreibung zu berücksichtigen ist.

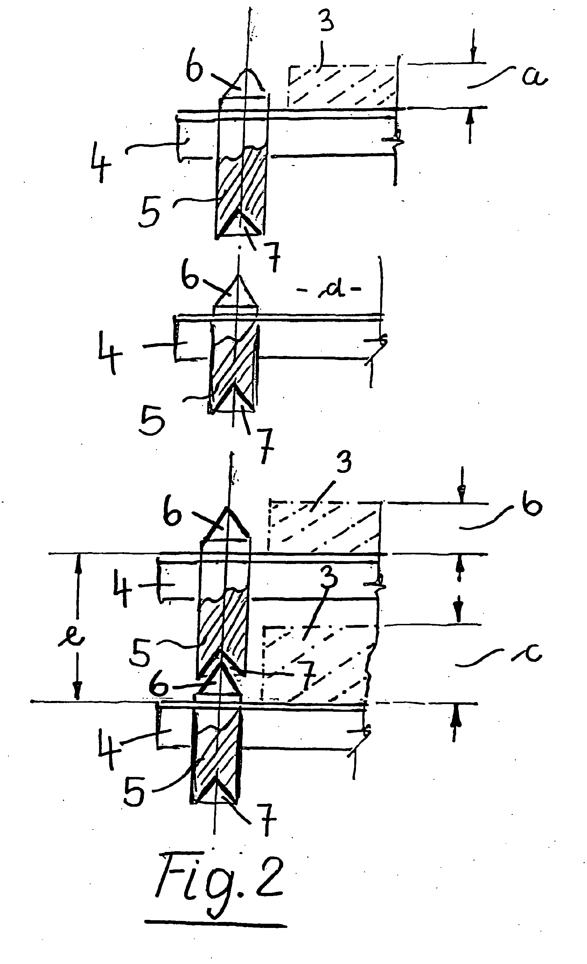

Zum Anheben bzw. zum Absenken der Gießbleche 3 finden, wie der Figur 2 zu entnehmen ist, erfindungsgemäß Querstreben 4 Verwendung, auf denen die Enden der Gießbleche 3 frei aufliegen.

In vorteilhafter Weise weisen die Querstreben 4 U-Form auf. Der Figur 2 kann deutlich entnommen werden, dass die verwendeten Gießbleche 3 eine verminderte Dicke (a), eine größere Dicke (b) oder eine wesentlich größere Dicke (c) aufweisen können.

Sofern das Gießblech 3 nicht einwandfrei mit Süßwarenerzeugnissen gefüllt wurde oder sofern dieses Gießblech 3 übermäßig verschmutzt wurde, ist es möglich, das Gießblech vom Förderband 2 abzunehmen, was dazu führt, dass die entsprechende Querstrebe 4 leer bleibt und dieses Gießblech 3 nicht aufnimmt, wie in Figur 2 mit dem Buchstaben (d) aufgezeigt. Das wird aber die Arbeitsweise der Anlage nicht negativ beeinflussen.

Jeweils zwischen zwei Querstreben 4, die parallel zueinander angeordnet sind, verbleibt stets ein konstanter Abstand, der in Figur 2 mit dem Buchstaben (e) gekennzeichnet ist; dieser Abstand reicht aus um Gießbleche 3 aufzunehmen, die sehr unterschiedliche Dicken (a, b, c) aufweisen.

Dieses Ergebnis wird dadurch erzielt, dass jede Querstrebe 4 an den Enden mit Säulenartigenstützen 5 bestückt ist, die als Abstandshalter dienen und an ihrer Oberseite eine Spitze 6 aufweisen und an ihrer Unterseite mit einer konischen Ausnehmung 7 versehen sind.

Daraus folgt, dass bei Anheben der Querstreben 4 die angespitzten Enden einer Stütze einer untenliegenden Querstrebe 4 in die konische Ausnehmung einer Stütze 5 einer darüberliegenden Querstrebe 4 eintreten. Somit, dank der gegenseitigen formschlüssigen Verbindung der Stützen 5, wird ein genau ausgerichteter stabiler Stapel gebildet, und gleichzeitig erfolgt eine lagerichtige Verbindung zwischen den Querstreben 4 und den Stützen 5 und dies unabhängig von der Dicke a, b, c der einzelnen Bleche 3 und ohne jegliche Störung, sofern eine Querstrebe 4 ohne ein zugeordnetes Gießblech gefördert wird, wie dies mit dem Buchstaben (d) in Figur 2 dargestellt ist.

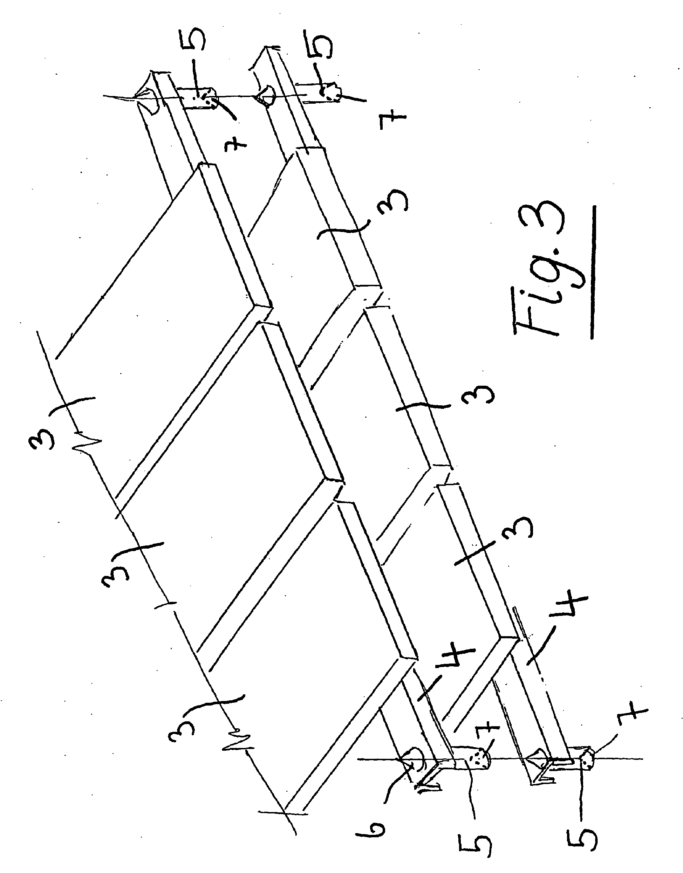

Der Figur 3 kann schematisch in perspektivischer Darstellung eine Anzahl von Gießblechen 3 entnommen werden, die mit den zugeordneten Enden auf Querstreben 4 aufliegen, die im Schnitt U-förmig ausgebildet sind.

In Figur 3 sind Querstreben 4 dargestellt, die lediglich an einem Ende der Gießbleche 3 dargestellt sind; es ist naheliegend, dass die Querstreben 4 auf beiden Endseiten der Gießbleche 3 angeordnet werden.

Deutlich sind der Figur 3 die Enden der Querstreben 4 zu entnehmen, welche die zusammenfügbaren Stützen 5 aufnehmen, die mit formschlüssiger Verbindung ein Zusammenfügen der angespitzten Enden 6 mit einer Ausnehmung an der darüber angeordneten Stütze 5 erlauben. Somit wird es ermöglicht, einen sehr stabilen Stapel, bestehend aus Gießblechen 3, herzustellen, mit der Möglichkeit im Inneren der Einrichtung die Gießbleche 3 in Form eines Stapels von unten nach oben bzw. von oben nach unten zu fördern.

Diese Handlungen sind durchführbar ohne hierfür Gießbleche zu verwenden, die eine besondere Form aufweisen, ferner treten keine technischen Nachteile auf, sofern die Zuführung der Gießbleche in unregelmäßiger Weise oder mit Unterbrechungen entlang des Transportbandes 2 erfolgt.

Auch verschiedene Dicken für die zugeführten Gießbleche beeinflussen in keinster Weise die gute Arbeitsweise der Vorrichtung 1.

Dank der Vorsehung von kleinen Stützen 5, die an einem oberen Ende 6 mit einer Spitze versehen sind, sowie unter Vorsehung einer Ausnehmung 7 mit konischer Form, am unteren Ende der Stütze 5, wird der Stabilisierungseffekt des gesamten Stapels der Gießbleche 3 überraschend verbessert.

## Patentansprüche

1. Temperiervorrichtung (1) für Schokoladenmasse oder ähnliche Massen, die in Gießblechen (3) enthalten sind, mit einer bekannten Vorrichtung zum Aufwärtsbewegen der zugeführten Gießbleche (3), sowie einer bekannten Vorrichtung zum Abwärtsbewegen der abzuführenden Gießbleche (3), wobei die Temperiervorrichtung (1) eine Einlauföffnung für die gefüllten Gießbleche (3), sowie eine Vorrichtung zum Stapeln und zum Anheben der zugeführten Gießbleche, sowie eine Vorrichtung zum Abwärtsbewegen und Abführen der behandelnden Gießbleche (3) aufweist
**dadurch gekennzeichnet**
**dass** die Gießbleche (3) im Inneren der Temperiervorrichtung (1) mit ihren Enden auf beweglichen Querstreben (4) aufliegen und an den Enden der Querstreben (4) jeweils eine Stütze (5) vorgesehen ist, die an ihrer Oberseite (6) mit einem zugespitzten Endstück (6) und an seiner Unterseite eine konische Ausnehmung (7) aufweist, dass während des Fördervorganges in der Temperiervorrichtung, das angespitzte Ende (6) und das untenliegende Ende einer Stütze (5) mit der konischen Ausnehmung (7) einer darüberliegenden Stütze (5) verbindbar ist, und jede Stütze (5) eine solche Länge aufweist, die den Freiraum (e) zwischen jeweils zwei parallel zueinander angeordneten Querstreben (4) bestimmt, die die Gießbleche (3) mit dem zu bearbeitenden Material aufnehmen.

2. Vorrichtung, nach Patentanspruch 1, **dadurch gekennzeichnet, dass** die Querstreben (4) im Querschnitt U-förmig ausgebildet sind.

3. Vorrichtung, nach Patentanspruch 1, **dadurch gekennzeichnet, dass** zwischen den gestapelten Querstreben (4) ein konstanter Freiraum verbleibt.

## Claims

1. Tempering apparatus (1) for a chocolate mass or similar masses which are contained in mould trays (3), with a known apparatus for the upwards movement of the supplied mould trays (3), and a known apparatus for the downwards movement of the mould trays (3) to be removed, wherein the tempering apparatus (1) has an inlet opening for the filled mould trays (3), and an apparatus for stacking and for raising the supplied mould trays, and an apparatus for the downwards movement and removal of the treated mould trays (3), **characterized in that** the mould trays (3) rest at the ends thereof in the interior of the tempering apparatus (1) on movable transverse struts (4), and a support (5) is provided at each of the ends of the transverse struts (4), the upper side (6) of said support having a pointed end piece (6) and the lower side of said support having a conical recess (7), **in that**, during the conveying operation in the tempering apparatus, the pointed end (6) of a lower support (5) can be connected to the conical recess (7) of a support (5) located thereabove, and each support (5) has a length which determines the clearance (e) between every two transverse struts (4), which are arranged parallel to each other and receive the mould trays (3) containing the material to be processed.

2. Apparatus according to Patent Claim 1, **characterized in that** the transverse struts (4) are of U-shaped design in cross section.

3. Apparatus according to Patent Claim 1, **characterized in that** a constant clearance remains between the stacked transverse struts (4).

## Revendications

1. Dispositif de conditionnement (1) pour une masse de chocolat ou des masses similaires, qui sont contenues dans des tôles à moules (3), comprenant un dispositif connu pour le déplacement vers le haut des tôles à moules acheminées (3), ainsi qu'un dispositif connu pour le déplacement vers le bas des tôles à moules à évacuer (3), le dispositif de conditionnement (1) présentant une ouverture d'entrée pour les tôles à moules remplies (3), ainsi qu'un dispositif pour empiler et soulever les tôles à moules acheminées, ainsi qu'un dispositif pour le déplacement vers le bas et l'évacuation des tôles à moules traitées (3),
**caractérisé en ce que**
les tôles à moules (3) reposent à l'intérieur du dispositif de conditionnement (1) avec leurs extrémités sur des traverses mobiles (4) et aux extrémités des traverses (4) est à chaque fois prévu un support (5) qui présente sur son côté supérieur (6) un embout pointu (6) et sur son côté inférieur un évidement conique (7), **en ce que** pendant l'opération de transport dans le dispositif de conditionnement, l'extrémité pointue (6) d'un support (5) sous-jacente peut être connectée à l'évidement conique (7) d'un support (5) situé au-dessus, et chaque support (5) présente une longueur qui détermine l'espace libre (e) entre à chaque fois deux traverses (4) disposées parallèlement l'une à l'autre, qui reçoivent les tôles à moules (3) avec le matériau à conditionner.

2. Dispositif selon la revendication 1, **caractérisé en ce que** les traverses (4) sont réalisées en forme de U en section transversale.

3. Dispositif selon la revendication 1, **caractérisé en ce qu'**entre les traverses empilées (4) subsiste un espace constant.
